# EUROPÄISCHE PATENTANMELDUNG

(11) **EP 3 918 954 A1**
(43) Veröffentlichungstag der Anmeldung: **08.12.2021**
(21) Anmeldenummer: 21176361.0
(22) Anmeldetag: 27.05.2021
(51) Int. Cl.: A47C 17/26

(54) **KOMBINIERTES SITZ- UND SCHLAFMÖBEL UND BAUSATZ**

(30) Priorität: 04.06.2020 DE 202020103217 U
(71) Anmelder: Froli Kunststoffwerk Heinrich Fromme, Inhaberin Margret Fromme-Ruthman e. Kfr., 33758 Schloß Holte-Stukenbrock (DE)
(72) Erfinder:
(74) Vertreter: Bittner, Thomas L.

(57) **Zusammenfassung**

Die Erfindung betrifft ein kombiniertes Sitz- und Schlafmöbel (1) mit: einem Grundkörper (2), in welchem ein Stauraum ausgebildet ist; und einem Deckel (3), der an dem Grundkörper (2) angeordnet und zwischen einer geöffneten Stellung, in welcher eine deckelseitige Öffnung des Grundkörpers (2) zum Stauraum hin geöffnet ist, und einer geschlossenen Stellung verlagerbar ist, in welcher die deckelseitige Öffnung geschlossen ist. Der Deckel (3) weist auf einer Flachseite (9a) eine Sitzfläche (10) und auf einer gegenüberliegenden Flachseite eine Anordnung von Federelementen auf, mit denen eine federnde Matratzenauflagefläche für eine Liegematratze bereitgestellt ist. Der Deckel (3) ist zwischen einer ersten geschlossenen Stellung, in welcher die Flachseite (9a) mit der Sitzfläche (10) außenseitig angeordnet ist, und einer zweiten geschlossenen Stellung verlagerbar, in welcher die gegenüberliegende Flachseite mit der Anordnung von Federelementen außenseitig angeordnet ist. Weiterhin ist ein Bausatz für ein kombiniertes Sitz- und Schlafmöbel (1) vorgesehen.

## Beschreibung

Die Erfindung betrifft ein kombiniertes Sitz- und Schlafmöbel sowie einen Bausatz für ein kombiniertes Sitz- und Schlafmöbel.

### Hintergrund

Sitzmöbel stellen für den Benutzer eine Sitzfläche zur Verfügung. Bei Schlafmöbeln wird dem Benutzer eine Liegefläche bereitgestellt. Die Anforderungen an die Ausgestaltung der entsprechenden Fläche, insbesondere betreffend eine Polsterung, bei der Sitzfläche einerseits und der Liegefläche anderseits sind verschieden und daher schwierig in Einklang zu bringen, wenn eine kombinierte Nutzung beabsichtigt ist. Bei Schlafmöbeln kann die Liegefläche für unterschiedliche Benutzer individuell dadurch ausgestaltet werden, dass eine Schlafmatratze aufgelegt wird, die den individuellen Bedürfnissen des jeweiligen Benutzers entspricht. Hierbei ist es bekannt, federnde Matratzenauflagenfläche bereitzustellen, indem eine Vielzahl von Federelementen über eine Unterlage verteilt angeordnet wird, derart, dass die Federelemente eine Matratzenauflagefläche bereitstellen. Eine solche federnde Unterlage für die Schlafmatratze ist jedoch nicht als Sitzfläche geeignet, selbst wenn anstelle der Schlafmatratze eine andere Matratze aufgelegt würde.

### Zusammenfassung

Aufgabe der Erfindung ist es, ein kombiniertes Sitz- und Schlafmöbel sowie einen Bausatz hierfür anzugeben, die eine kombinierte Nutzung zum Sitzen und Schlafen für unterschiedliche Anwendungssituationen auf einfache Art und Weise ermöglichen.

Zur Lösung ist ein kombiniertes Sitz- und Schlafmöbel nach dem unabhängigen Anspruch 1 geschaffen. Der nebengeordnete Anspruch 13 betrifft einen Bausatz für ein kombiniertes Sitz- und Schlafmöbel. Ausgestaltungen sind Gegenstand von abhängigen Unteransprüchen.

Nach einem Aspekt ist ein kombiniertes Sitz- und Schlafmöbel mit einem Grundkörper, in welchem ein Stauraum ausgebildet ist, und einem Deckel geschaffen, der an dem Grundkörper angeordnet und zwischen einer geöffneten Stellung, in welcher eine deckelseitige Öffnung des Deckels zum Stauraum hin geöffnet ist, und einer geschlossenen Stellung verlagerbar ist, in welcher die deckelseitige Öffnung geschlossen ist. Der Deckel weist auf einer Flachseite eine Sitzfläche und auf einer gegenüberliegenden Flachseite eine Anordnung von Federelementen auf, mit denen eine federnde Matratzenauflagefläche für eine Liegematratze bereitgestellt ist. Der Deckel ist zwischen einer ersten geschlossenen Stellung, in welcher die Flachseite mit der Sitzfläche außenseitig angeordnet ist, und einer zweiten geschlossenen Stellung verlagerbar, in welcher die gegenüberliegende Flachseite mit der Anordnung von Federelementen außenseitig angeordnet ist.

Nach einem weiteren Aspekt ist ein Bausatz für ein kombiniertes Sitz- und Schlafmöbel mit einem Grundkörper, in welchem ein Stauraum ausgebildet ist, und einem Deckel geschaffen, der an dem Grundkörper montierbar ist, derart, dass der Deckel zwischen einer geöffneten Stellung, in welcher eine deckelseitige Öffnung des Grundkörpers zum Stauraum hin geöffnet ist, und einer geschlossenen Stellung verlagerbar ist, in welcher die deckelseitige Öffnung des Stauraums geschlossen ist. Der Deckel weist auf einer Flachseite eine Sitzfläche und auf einer gegenüberliegenden Flachseite eine Anordnung von Federelementen auf, mit denen eine federnde Matratzenauflagefläche für eine Liegematratze bereitgestellt ist. Der Deckel ist nach dem Anordnen an dem Grundkörper zwischen einer ersten geschlossenen Stellung, in welcher die Flachseite mit der Sitzfläche außenseitig angeordnet ist, und einer zweiten geschlossenen Stellung verlagerbar, in welcher die gegenüberliegende Flachseite mit der Anordnung von Federelementen außenseitig angeordnet ist.

Das Möbel ist eingerichtet, sowohl als Sitzmöbel wie auch als Schlafmöbel genutzt zu werden. Hierbei sind Sitzfläche und Matratzenauflagefläche für die Liegematratze sind am Deckel gebildet und hierdurch unabhängig voneinander gestalt- und optimierbar für den jeweiligen Zweck. Die Umrüstung zwischen Sitzmöbel und Schlafmöbel ist auf einfache Art und Weise ermöglicht, indem der Deckel umgedreht wird, so dass entweder die Flachseite mit der Sitzfläche oder die gegenüberliegende Flachseite mit der Anordnung von Federelementen die deckseitige Oberfläche des Möbels bildet. Zum Bereitstellen der Liegematratzenauflagefläche sind auf der gegenüberliegenden Flachseite des Deckels Federelemente vorgesehen, die eine für das Schlafmöbel geeignete Matratzenauflagefläche bereitstellen. Hierauf kann dann eine Schlaf- oder Liegematratze aufgelegt werden, um die Schlaf- oder Liegefläche bereitzustellen, wenn das Möbel als Schlafmöbel genutzt wird.

Die Federelemente der Anordnung von Federelementen können jeweils mit einer Basis oder einem Elementfuß, welche(r) auf dem Deckel angeordnet ist, einem Auflageteller oder einer Elementauflage, mit dem / der eine Auflagefläche bereitgestellt ist, und mindestens einem Federarm oder -bein gebildet sein, welcher sich zwischen der Basis und dem Auflageteller oder Teilen hiervon erstreckt. Die Federelemente können mehrere getrennte oder miteinander verbundene Auflageteller (auch Teilauflageteller) bereitstellend ausgebildet sein, denen jeweils ein von der Basis ausgehender Federarm zugeordnet ist. Die Auflageteller bilden dann für das Federelement eine Elementgesamtauflage. Die Auflageteller der Federelemente der Anordnung bilden zusammen die Matratzenauflagenfläche an dem Deckel des kombinierten Sitz- und Schlafmöbels. Federelemente sind als solche in verschiedenen Ausführungsformen bekannt. Sie können lösbar oder nicht lösbar an dem Deckel montiert sein.

Die Anordnung von Federelementen kann eine Oberfläche des Deckels auf der gegenüberliegenden Flachseite im Wesentlichen vollständig erfassend ausgebildet sein. Bei dieser Ausführungsform kann sich die von den Federelementen bereitgestellte Matratzenauflagefläche im Wesentlichen über die gesamte Oberfläche des Deckels erstrecken. Bei dieser oder anderen Ausführungsformen können die Federelemente einer regelmäßigen Anordnung entsprechend an dem Deckel befestigt sein. Ist der Deckel in der ersten geschlossenen Stellung angeordnet, befindet sich die Anordnung von Federelementen bei dieser oder anderen Ausführungen auf der Unterseite des Deckels und kann so in den Stauraum des Grundkörpers hereinragen, zumindest teilweise.

Der Deckel kann in der geschlossenen Stellung in einer Deckelaufnahme an dem Grundkörper angeordnet und hierdurch zumindest gegen eine horizontale Verlagerung relativ zum Grundkörper gesichert sein. Auf diese Weise ist verhindert, dass sich der Deckel bei der Nutzung, sei es als Sitzfläche oder als Liegematratzenauflagefläche, relativ zum Grundkörper unbeabsichtigt verschiebt. Zur Sicherung des Deckels in der Deckelaufnahme können einander zugeordnete Positionierabschnitte an dem Deckel und an der Deckelaufnahme des Grundkörpers ineinandergreifen, insbesondere formschlüssig. Der Deckel kann teilweise in eine Ausnehmung an der Wandung des Grundkörpers eingelassen sein, wenn er in der geschlossenen Stellung angeordnet ist. Beispielsweise kann an der Wandung des Grundkörpers eine Vertiefung vorgesehen sein, die randseitig umlaufend durchgehend oder unterbrochen ausgebildet sein kann, in die der Deckel eingelegt ist. Der Deckel kann in einer Ausgestaltung deckflächenbündig mit einem oberen Rand von Seitenwänden des Grundkörpers in der geschlossenen Stellung angeordnet sein, wobei insbesondere die Federelemente oben überstehen, wenn der Deckel in der zweiten geschlossenen Stellung angeordnet ist.

Der Deckel kann abnehmbar an dem Grundkörper angeordnet sein. Bei dieser Ausgestaltung kann der Deckel vollständig von dem Grundkörper abgenommen werden, um zum Beispiel einen Wechsel zwischen der ersten und der zweiten geschlossenen Stellung vorzunehmen.

Der Deckel kann mittels eines Klapp-Schiebe-Mechanismus an dem Deckel angeordnet sein, derart, dass der Deckel mit Hilfe einer Klapp-Schiebe-Bewegung zwischen der ersten und der zweiten geschlossenen Stellung verlagerbar ist. Diese Ausgestaltung kann alternativ oder ergänzend zu der Abnehmbarkeit des Deckels vom Grundkörper vorgesehen sein. Der Deckel kann mittels einer Klapp-Schiebe-Bewegung zwischen den beiden geschlossenen Stellungen verlagert werden. Beispielsweise können an dem Grundkörper hierfür auf gegenüberliegenden Seiten Führungen vorgesehen sein, in denen zugeordnete Vorsprünge, die am Deckel gebildet sind, bei der Klapp-Schiebe-Bewegung zum Verlagern geführt werden, wobei diese Verschiebebewegung entlang der Führungen mit einer Schwenkbewegung kombiniert oder hiervon überlagert wird, um entweder die Flachseite mit der Sitzfläche oder die gegenüberliegende Flachseite mit der Anordnung von Federelementen auf die Oberseite zu bringen, um das Sitz- oder das Schlafmöbel bereitzustellen.

Der Deckel kann mittels eines Schwenk-Mechanismus an dem Deckel angeordnet sein, derart, dass der Deckel mit Hilfe einer Schwenkbewegung zwischen der ersten und der zweiten geschlossenen Stellung verlagerbar ist. Der Schwenk-Mechanismus kann alternativ oder ergänzend zum Klapp-Schiebe-Mechanismus vorgesehen sein. Auch kann der Schwenk-Mechanismus mit der Abnehmbarkeit des Deckels vom Grundkörper kombiniert werden. Bei dem Schwenk-Mechanismus kann vorgesehen sein, dass der Deckel um eine im Wesentlichen mittig zum Deckel verlaufenden Dreh- oder Rotationsachse drehbar ist, um entweder die Flachseite oder die gegenüberliegende Flachseite nach oben zu bringen.

Der Deckel kann zwischen der geöffneten und der geschlossenen Stellung mittels Schwenkbewegung verlagerbar sein. Hierzu kann der Deckel beispielsweise um eine am Deckel randseitig gebildete Schwenkachse schwenkbar sein.

Die Sitzfläche kann mit einer Sitzpolsterung gebildet sein. Die Sitzpolsterung für die Sitzfläche kann an dem Deckel lösbar oder nicht lösbar angebracht sein. Eine lösbare Montage kann zum Beispiel mittels einer Klett- oder Druckknopf-Verbindung ausgeführt sein. Die Sitzpolsterung kann eine oder mehrere Lagen aufweisen.

Der Grundkörper kann im Bereich von Seitenwänden Griffelemente aufweisen. Griffelemente können an dem Grundkörper zum Beispiel auf gegenüberliegenden Seiten vorgesehen sein. Eine Ausführung als Griffmulde kann vorgesehen sein. Alternativ oder ergänzend können in der Wandung des Grundkörpers ein oder mehrere Durchbrüche vorgesehen sein, die als Griffelemente ausgebildet sind. Ergänzend oder als alternative Ausgestaltung kann an dem Deckel ein Griffelement vorgesehen sein, insbesondere zum Greifen des Deckels beim Verlagern zwischen der ersten und der zweiten geschlossenen Stellung.

Der Stauraum kann als allseitig geschlossener Stauraum ausgeführt sein, wenn der Deckel in der geschlossenen Stellung angeordnet ist. Bei dieser Ausgestaltung ist der Stauraum in einer geschlossenen Box bereitgestellt. Hierin können bei dieser oder anderen Ausgestaltungen beliebige Gegenstände aufgenommen werden.

Das kombinierte Sitz- und Schlafmöbel können als Möbel aus der folgenden Gruppe ausgebildet sein: Innenraummöbel und Einbaumöbel für Wohnmobil oder Wohnwagen. Das kombinierte Sitz- und Schlafmöbel kann in Gebäuden oder Wohnungen als Innenraummöbel genutzt werden. Die flexible Verwendung als Sitz- oder Schlafmöbel ist von besonderem Vorteil in engen Räumen, insbesondere auch in Wohnmobilen oder Wohnwagen. Nicht nur dort erweisen sich die kombinierte Nutzung als Sitz- und Schlafmöbel wie auch die Bereitstellung des Stauraums als vorteilhafte Eigenschaften.

In Verbindung mit dem Bausatz für das kombinierte Sitz- und Schlafmöbel können die vorangehend erläuterten Ausgestaltungsvarianten entsprechend vorgesehen sein.

### Beschreibung von Ausführungsbeispielen

Im Folgenden werden weitere Ausführungsbeispiele unter Bezugnahme auf Figuren einer Zeichnung näher erläutert. Hierbei zeigen:
- Fig. 1: eine schematische perspektivische Darstellung eines kombinierten Sitz- und Schlafmöbels, bei dem ein Deckel in einer ersten geschlossenen Stellung angeordnet ist, derart, dass deckseitig eine Sitzfläche bereitgestellt ist;
- Fig. 2: eine schematische perspektivische Darstellung eines Grundkörpers des kombinierten Sitz- und Schlafmöbels aus Fig. 1 mit abgenommenem Deckel;
- Fig. 3: eine schematische perspektivische Darstellung des kombinierten Sitz- und Schlafmöbels aus Fig. 1, wobei der Deckel in eine geöffnete Stellung geschwenkt ist;
- Fig. 4: eine schematische perspektivische Darstellung des kombinierten Sitz- und Schlafmöbels aus Fig. 1, wobei der Deckel weiter aufgeschwenkt und gleichzeitig verschoben ist;
- Fig. 5: eine schematische perspektivische Darstellung des kombinierten Sitz- und Schlafmöbels aus Fig. 1, wobei der Deckel umgeschwenkt ist, derart, dass eine Anordnung von Federelementen nach oben gelangt;
- Fig. 6: eine schematische perspektivische Darstellung des kombinierten Sitz- und Schlafmöbels aus Fig. 1, wobei der Deckel wieder in einer geschlossenen Stellung angeordnet ist, derart, dass deckseitig eine Matratzenauflagefläche bereitgestellt ist;
- Fig. 7: eine schematische perspektivische Darstellung des kombinierten Sitz- und Schlafmöbels aus Fig. 1, wobei auf der Anordnung von Federelementen eine Liegematratze aufgelegt ist;
- Fig. 8: eine schematische perspektivische Darstellung des Deckels des kombinierten Sitzund Schlafmöbels aus Fig. 1 mit der Sitzfläche oben und
- Fig. 9: eine schematische perspektivische Darstellung des Deckels des kombinierten Sitzund Schlafmöbels aus Fig. 1 mit der Anordnung von Federelementen oben.

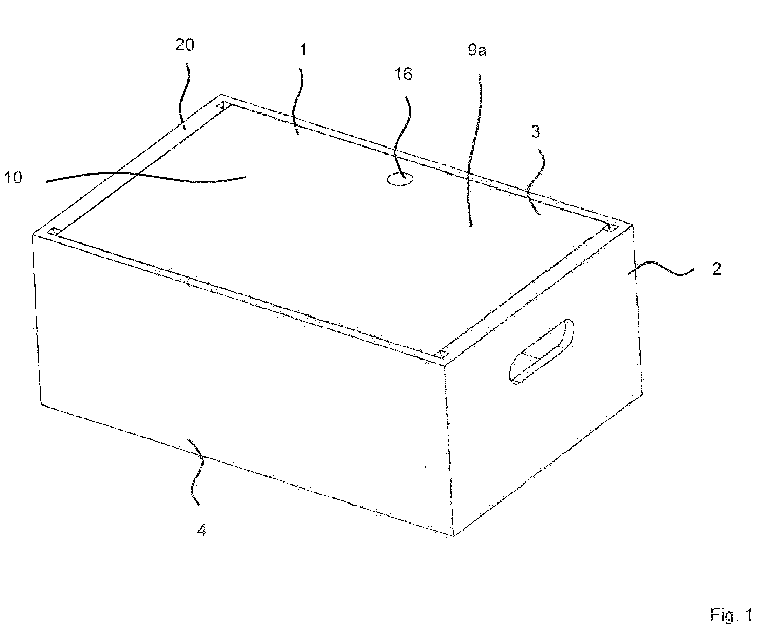

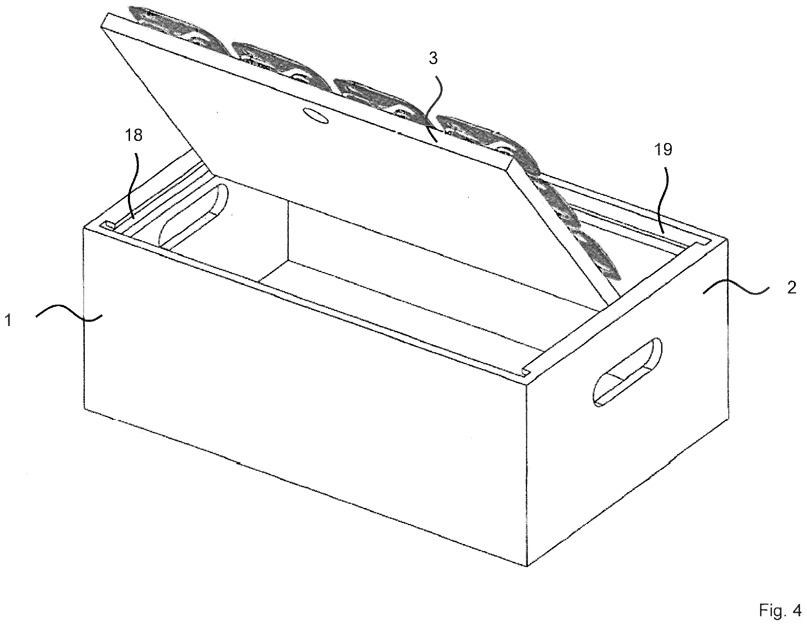

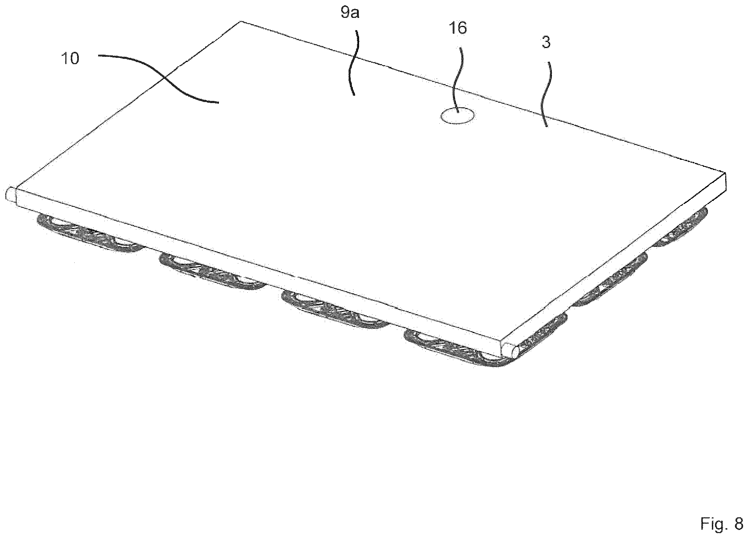

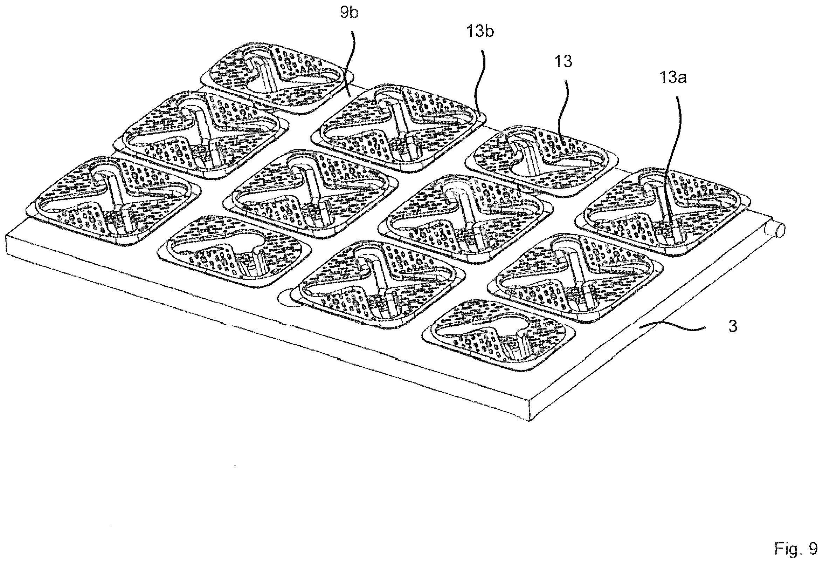

Fig. 1 bis 9 zeigen schematische perspektivische Darstellungen eines kombinierten Sitz- und Schlafmöbels 1 mit einem Grundkörper 2 sowie einem Deckel 3.

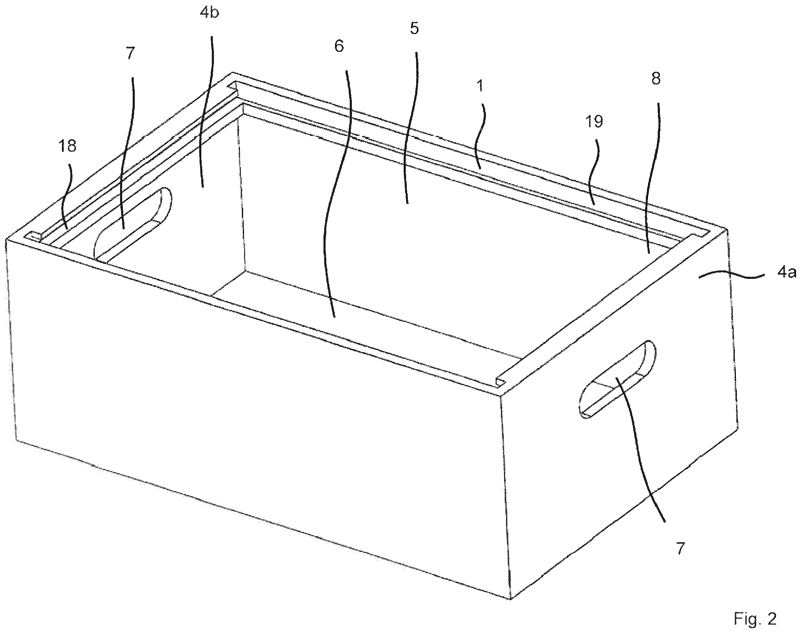

Gemäß den Fig. 1 und 2 weist der Grundkörper 2 eine Wandung mit Seitenwänden 4 auf, die einen Stauraum 5 umgeben. Unten wird der Stauraum 5 durch einen Boden 6 begrenzt. In gegenüberliegenden Seitenwänden 4a, 4b sind Griffelemente 7 vorgesehen, die als Durchbrüche ausgeführt sind. Bei der Darstellung in Fig. 2 ist der Deckel 3 von dem Grundkörper 2 abgenommen, so dass eine deckelseitige Öffnung 8 zum Stauraum 5 hin vollständig geöffnet ist. In dem Stauraum 5 können dann beliebige Gegenstände verstaut werden.

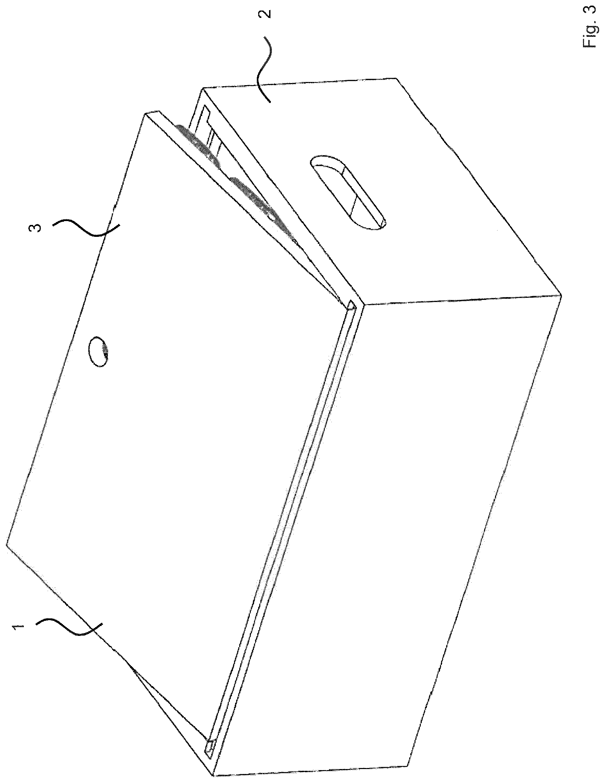

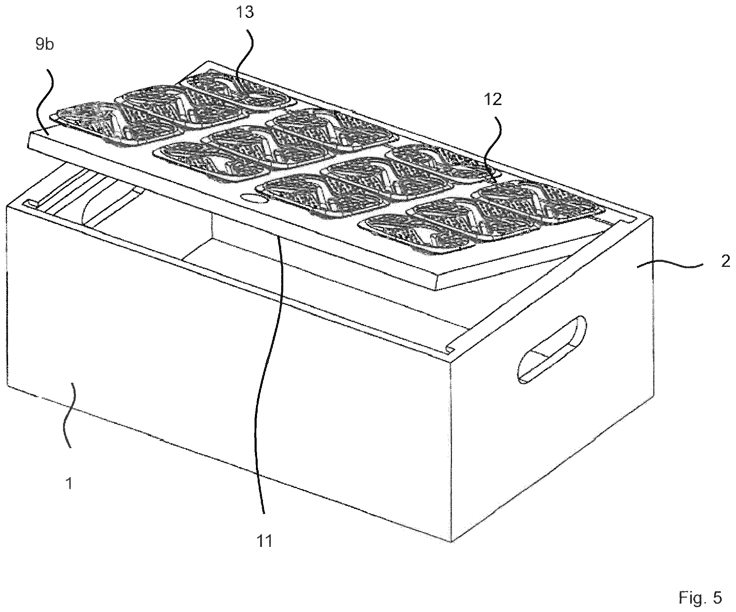

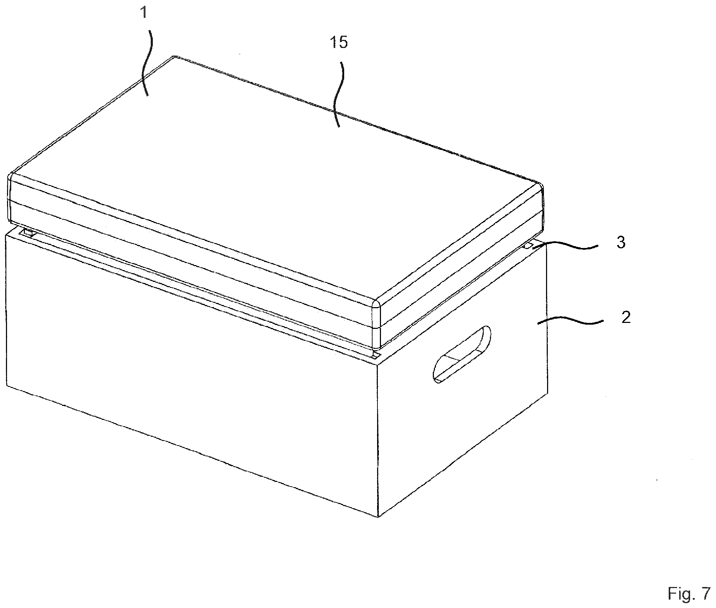

Gemäß den Fig. 3 bis 6 kann der Deckel 3 mittels einer Schwenk-Schiebe-Bewegung derart verlagert werden, dass eine auf einer Flachseite 9a des Deckels 3 gebildete Sitzfläche 10 zunächst deckseitig (vergleiche Fig. 1) und dann auf einer Unterseite 11 des Deckels 5 angeordnet wird (vgl. Fig. 5). Nach dem vollständigen Umdrehen des Deckels 3 ist eine Anordnung von Federelementen 12 mit Federelementen 13 deckseitig angeordnet, die auf einer gegenüberliegenden Flachseite 9b des Deckels 3 gebildet ist. Die Federelemente 13 weisen jeweils eine Basis 13a, einen Auflageteller 13b sowie sich zwischen der Basis 13a und dem Auflageteller 13b erstreckende Federarme oder -beine 13c auf. Mittels den Auflagentellern 13b ist eine Matratzenauflagefläche 14 bereitgestellt, um das kombinierte Sitz- und Schlafmöbel 1 als Schlafmöbel auszugestalten, bei dem gemäß Fig. 7 auf dem Deckel 3 dann eine Schlaf- oder Liegematratze 15 angeordnet ist.

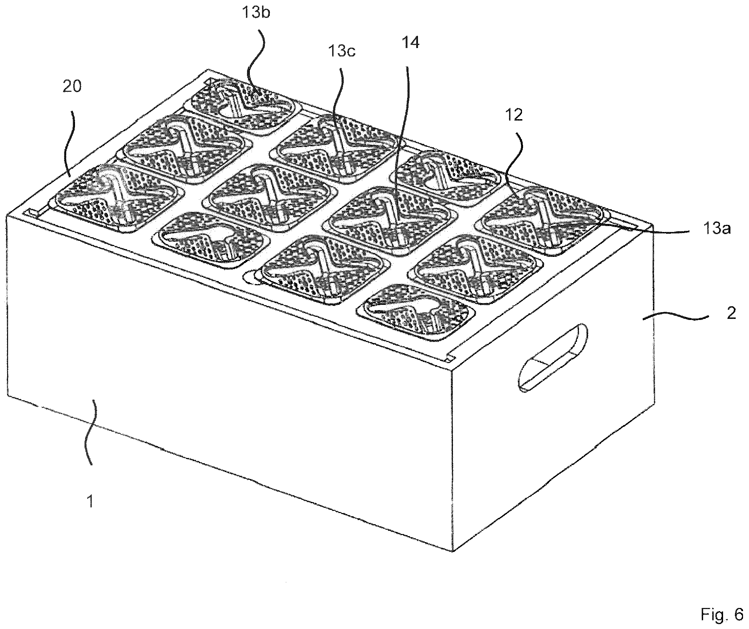

Beim Verlagern zwischen der geschlossenen Stellung in Fig. 1 und der (auch) geschlossenen Stellung in Fig. 6 kann der Deckel 3 vom Nutzer mittels eines Griffelements 16 am Deckel 3 gegriffen werden. Beim Umdrehen des Deckels 3 sind Vorsprünge 17, die am Deckel 3 gebildet sind, in zugeordneten Führungen 18 am Grundkörper 2 geführt, so dass der Deckel 3 eine kombinierte Schiebe- sowie Klapp- oder Schwenk-Bewegung ausführt.

Gemäß den Darstellungen in Fig. 1 und Fig. 6 ist der Deckel 3 in der jeweils geschlossenen Stellung in einer Deckelaufnahme 19 angeordnet und so gegen eine Horizontalverlagerung bei der Nutzung sowohl als Sitzfläche als auch als Matratzenauflagefläche gesichert. Bei dem gezeigten Ausführungsbeispiel ist der Deckel 3 flächenbündig mit deckseitigen Randflächen 20 der Seitenwände 4 des Grundkörpers 2 angeordnet, was insbesondere in Fig. 1 und 6 gezeigt ist.

In einer alternativen Ausgestaltung kann der Deckel 3 um eine Schwenk- oder Rotationsachse verlagerbar sein, die sich im Wesentlichen mittig zu dem Deckel 3 erstreckt, um so mittels Umdrehen die verschiedenen Flachseiten 9a, 9b des Deckels 3 nach oben zu bringen.

Der Grundkörper 2 und der Deckel 3 können aus gleichen oder unterschiedlichen Materialien bestehen. Beispielsweise kann eine Ausführung aus einem oder mehreren der folgenden Werkstoffe vorgesehen sein: Kunststoff, Holz und Metall.

Bei dem gezeigten Ausführungsbeispiel in Fig. 1 ist die Sitzfläche 10 allein mit dem Deckel 3 gebildet. Es kann alternativ vorgesehen sein, im Bereich der Sitzfläche 10 eine ein- oder mehrlagige Polsterung am Deckel 3 anzuordnen, sei es lösbar oder nicht lösbar.

Das kombinierte Sitz- und Schlafmöbel 1 kann zur Innenraumgestaltung in Häusern oder Gebäuden genutzt werden. Vergleichbar ist eine Verwendung als Sitz- und Schlafmöbel in einem Wohnmobil oder einen Wohnwagen möglich.

Die in der vorstehenden Beschreibung, den Ansprüchen sowie der Zeichnung offenbarten Merkmale können sowohl einzeln als auch in beliebiger Kombination für die Verwirklichung der verschiedenen Ausführungen von Bedeutung sein.

## Patentansprüche

1. Kombiniertes Sitz- und Schlafmöbel (1), mit:
- einem Grundkörper (2), in welchem ein Stauraum (5) ausgebildet ist; und
- einem Deckel (3), der an dem Grundkörper (2) angeordnet und zwischen einer geöffneten Stellung, in welcher eine deckelseitige Öffnung (8) des Grundkörpers (2) zum Stauraum (5) hin geöffnet ist, und einer geschlossenen Stellung verlagerbar ist, in welcher die deckelseitige Öffnung (8) geschlossen ist;
wobei der Deckel (3) auf einer Flachseite (9a) eine Sitzfläche (10) und auf einer gegenüberliegenden Flachseite (9b) eine Anordnung von Federelementen (12) aufweist, mit denen eine federnde Matratzenauflagefläche (14) für eine Liegematratze (15) bereitgestellt ist; und
wobei der Deckel (3) zwischen einer ersten geschlossenen Stellung, in welcher die Flachseite (9a) mit der Sitzfläche (10) außenseitig angeordnet ist, und einer zweiten geschlossenen Stellung verlagerbar ist, in welcher die gegenüberliegende Flachseite (9b) mit der Anordnung von Federelementen (12) außenseitig angeordnet ist.

2. Kombiniertes Sitz- und Schlafmöbel (1) nach Anspruch 1, **dadurch gekennzeichnet, dass** die Federelemente (13) der Anordnung von Federelementen (12) jeweils mit
- einer Basis (13a), welcher auf dem Deckel (3) angeordnet ist,
- einem Auflageteller (13b), mit dem eine Auflagefläche bereitgestellt ist, und
- einem Federarm (13c) gebildet sind, welcher sich zwischen der Basis (13a) und dem Auflageteller (13b) erstreckt.

3. Kombiniertes Sitz- und Schlafmöbel (1) nach Anspruch 1 oder 2, **dadurch gekennzeichnet, dass** die Anordnung von Federelementen (12) eine Oberfläche des Deckels (3) auf der gegenüberliegenden Flachseite (9b) im Wesentlichen vollständig erfassend ausgebildet ist.

4. Kombiniertes Sitz- und Schlafmöbel (1) nach mindestens einem der vorangehenden Ansprüche, **dadurch gekennzeichnet, dass** der Deckel (3) in der geschlossenen Stellung in einer Deckelaufnahme (19) an dem Grundkörper (2) angeordnet und hierdurch zumindest gegen eine horizontale Verlagerung relativ zum Grundkörper (2) gesichert ist.

5. Kombiniertes Sitz- und Schlafmöbel (1) nach mindestens einem der vorangehenden Ansprüche, **dadurch gekennzeichnet, dass** der Deckel (3) abnehmbar an dem Grundkörper (2) angeordnet ist.

6. Kombiniertes Sitz- und Schlafmöbel (1) nach mindestens einem der vorangehenden Ansprüche, **dadurch gekennzeichnet, dass** der Deckel (3) mittels eines Klapp-Schiebe-Mechanismus an dem Deckel (3) angeordnet ist, derart, dass der Deckel (3) mit Hilfe einer Klapp-Schiebe-Bewegung zwischen der ersten und der zweiten geschlossenen Stellung verlagerbar ist.

7. Kombiniertes Sitz- und Schlafmöbel (1) nach mindestens einem der vorangehenden Ansprüche, **dadurch gekennzeichnet, dass** der Deckel (3) mittels eines Schwenk-Mechanismus an dem Deckel (3) angeordnet ist, derart, dass der Deckel (3) mit Hilfe einer Schwenkbewegung zwischen der ersten und der zweiten geschlossenen Stellung verlagerbar ist.

8. Kombiniertes Sitz- und Schlafmöbel (1) nach mindestens einem der vorangehenden Ansprüche, **dadurch gekennzeichnet, dass** der Deckel (3) zwischen der geöffneten und der geschlossenen Stellung mittels Schwenkbewegung verlagerbar ist.

9. Kombiniertes Sitz- und Schlafmöbel (1) nach mindestens einem der vorangehenden Ansprüche, **dadurch gekennzeichnet, dass** die Sitzfläche (10) mit einer Sitzpolsterung gebildet ist.

10. Kombiniertes Sitz- und Schlafmöbel (1) nach mindestens einem der vorangehenden Ansprüche, **dadurch gekennzeichnet, dass** der Grundkörper (2) im Bereich von Seitenwänden (4) Griffelemente (7) aufweist.

11. Kombiniertes Sitz- und Schlafmöbel (1) nach mindestens einem der vorangehenden Ansprüche, **dadurch gekennzeichnet, dass** der Stauraum (5) als allseitig geschlossener Stauraum ausgeführt ist, wenn der Deckel (3) in der geschlossenen Stellung angeordnet ist.

12. Kombiniertes Sitz- und Schlafmöbel (1) nach mindestens einem der vorangehenden Ansprüche, eingerichtet als Möbel aus der folgenden Gruppe: Innenraummöbel und Einbaumöbel für Wohnmobil oder Wohnwagen.

13. Bausatz für ein kombiniertes Sitz- und Schlafmöbel (1), mit
- einem Grundkörper (2), in welchem ein Stauraum (5) ausgebildet ist; und
- einem Deckel (3), der an dem Grundkörper (2) montierbar ist, derart, dass der Deckel (3) zwischen einer geöffneten Stellung, in welcher eine deckelseitige Öffnung (8) des Grundkörpers (2) zum Stauraum (5) hin geöffnet ist, und einer geschlossenen Stellung verlagerbar ist, in welcher die deckelseitige Öffnung (8) des Stauraums (5) geschlossen ist;
wobei der Deckel (3) auf einer Flachseite (9a) eine Sitzfläche (10) und auf einer gegenüberliegenden Flachseite (9b) eine Anordnung von Federelementen (12) aufweist, mit denen eine federnde Matratzenauflagefläche (14) für eine Liegematratze (15) bereitgestellt ist, und
wobei der Deckel (3) nach dem Anordnen an dem Grundkörper (2) zwischen einer ersten geschlossenen Stellung, in welcher die Flachseite (9a) mit der Sitzfläche (10) außenseitig angeordnet ist, und einer zweiten geschlossenen Stellung verlagerbar ist, in welcher die gegenüberliegende Flachseite (9b) mit der Anordnung von Federelementen (12) außenseitig angeordnet ist.
